Europäisches Patentamt

European Patent Office  (11) Publication number: **0 044 603**

Office européen des brevets  **B1**

## EUROPEAN PATENT SPECIFICATION

(45) Date of publication of patent specification: **10.07.85**   (51) Int. Cl.⁴: **G 11 B 7/00**

(21) Application number: **81201023.9**

(22) Date of filing: **27.03.79**

(60) Publication number of the earlier application in accordance with Art. 76 EPC: **0 005 316**

(54) Apparatus and method for writing a signal information track on a disc.

(30) Priority: **27.03.78 US 890407**
**27.03.78 US 890771**

(43) Date of publication of application:
**27.01.82 Bulletin 82/04**

(45) Publication of the grant of the patent:
**10.07.85 Bulletin 85/28**

(84) Designated Contracting States:
**BE CH DE FR GB IT NL SE**

(56) References cited:
**DE-A-2 521 695**
**FR-A-2 218 612**
**JP-A-53 009 101**
**US-A-3 562 422**
**US-A-3 579 145**
**US-A-3 657 707**
**US-A-3 708 797**

(73) Proprietor: **DISCOVISION ASSOCIATES**
**P.O. Box 6600 3300 Hyland Avenue**
**Costa Mesa California 92626 (US)**

(72) Inventor: **Wilkinson, Richard L.**
**21341 Avenida Manantial**
**E. Toro California 92630 (US)**
Inventor: **Winslow, John S.**
**4380, Canyon Crest Road**
**Altadena California 91001 (US)**

(74) Representative: **Arthur, George Fitzgerald et al**
**KILBURN & STRODE 30, John Street**
**London WC1N 2DD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to the writing of a frequency modulated electrical signal upon an information bearing surface of a disc member in the form of a lineal series of first and second indicia positioned in track-like fashion upon such surface. It is one of a series of related applications consisting of EP—A—5 316 (the parent case) and divisional applications EP—A—44 121 EP—A—44 122, EP—A—44 603, EP—A—45 117 and EP—A—48 041. These cases are all concerned with recording information on a surface with a modulated radiation beam, the surface changing its characteristics when the radiation exceeds a threshold level. EP—A—5 316, EP—A—44 122 and EP—A—4 448 041 are concerned especially with feedback to keep the average intensity of the radiation reaching the surface equal to the threshold level; the present EP—A—44 603 also uses such feedback, in addition to a control for the intensity of the unmodulated radiation, so that when the average intensity of the radiation reaching the surface equals the threshold level the modulator is at the centre of its range of modulation. EP—A—44 121 is concerned especially with driving the beam modulator with a triangular wave, the modulator having a sinusoidal relationship between its drive voltage and its radiation transfer function. EP—A—45 117 is concerned especially with a feedback system which monitors the second harmonic distortion in the recording beam and controls the modulator to reduce that distortion.

According to the present invention in a method of writing an information track on a disc having a surface capable of responding to more than a certain intensity of laser or other radiation (the threshold level) by being converted from having one radiation reflecting characteristic to having a second characteristic, the intensity of the radiation being directed at a local point along the track is modulated over a defined range of modulation in response to an information signal, the average intensity of the modulated radiation is compared with a reference signal, a resulting comparison signal is fed back to adjust continuously a bias level of modulation, and the reference signal and the intensity of the unmodulated radiation are set such that the modulation is at the centre of its range of modulation when the intensity of the modulated beam equals the threshold level.

The invention is a development from the disclosure of French Patent Specification No. 22186512 in which a linearly polarised ion laser is used as the source of the writing beam, a Pockels cell is used to rotate the plane of polarisation of the writing beam and a linear polariser attenuates the rotated writing beam in an amount proportional to the difference in polarisation between the light in the writing beam and the axis of the linear polariser.

A portion of the writing beam is sensed by a Pockels cell stabilising circuit in combination with a feedback circuit which maintains the average level of intensity of the modulated beam at a pre-set level.

It will be appreciated that the present invention has both the arrangement for feeding back a signal derived from the pre-set reference signal and also a means for setting the intensity of the unmodulated radiation in relation to the threshold level.

Broadbent's Article "A review of the MCA Disco-Vision System" at page 12, of Information Display, Vol. 12. No. 2 April, 1976, refers to a Pockels cell but the only control described is an adjustable d.c. bias for minimising second harmonic distortion.

It is known from JP—A—539101 to derive an error signal from a read-after-write beam and use it in a feedback loop to adjust the intensity of the unmodulated write beam so as to reduce second harmonic distortion of the recording on the disc.

The invention may be carried into practice in various ways, and one embodiment will be described with reference to the accompanying drawings in which:—

Figure 1 is a block diagram of a disc writing apparatus; and

Figure 2 is a schematic diagram of a suitable stabilising circuit for use in the write apparatus shown in Figure 1.

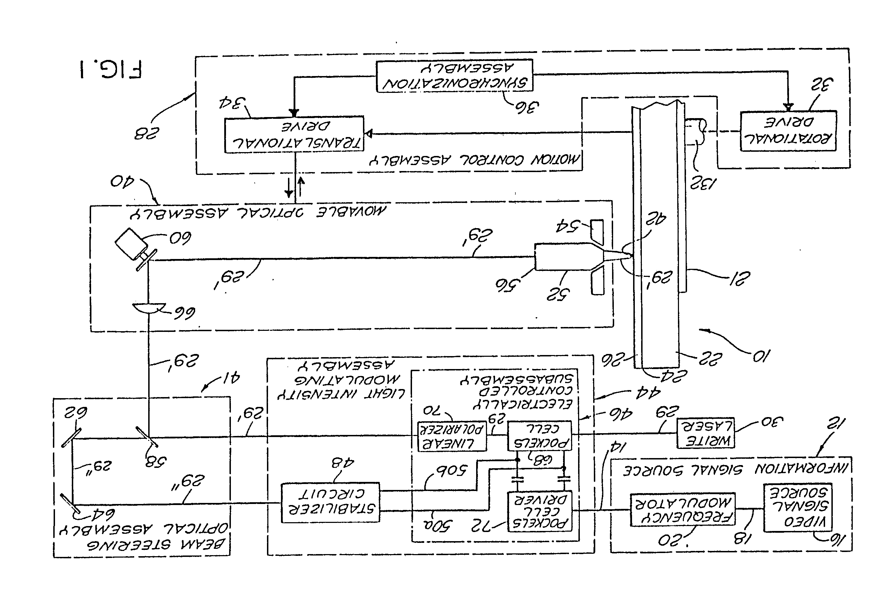

The apparatus for storing video information in the form of a frequency modulated signal upon an information storage member 10 is shown with reference to Figure 1. An information signal source circuit 12 is employed for providing an information signal to be recorded. This information signal present on a line 14 is a frequency modulated signal having its information content in the form of a carrier frequency having frequency changes in time representing said information to be recorded. The information signal source circuit 12 employs a video signal circuit 16 for providing an information signal on a line 18 having its information content in the form of a voltage varying with time.

A frequency modulator circuit 20 is responsive to the video signal circuit 16 for converting the voltage varying with time signal to the frequency modulated signal on the line 14.

The information storage member 10 is mounted upon a turntable 21. It includes a substrate 22 having a first surface 24 and a light responsive coating 26 covering the first surface 24. A motion control assembly 28 imparts uniform motion to the storage member 10 relative to a write beam 29' generated by a light source 30. The motion control assembly 28 includes a rotational drive circuit 32 for providing uniform rotational motion to the information storage member 10 and translational drive circuit 34 synchronised with the rotational drive circuit 32 for moving the focused light beam 29' radially across the coating 26. The motion control assembly 28 further includes an electrical synchronizing assembly 36 for maintaining a constant relationship between the rotational motion imparted to the member 10 by the rotational drive circuit 32 and the translational motion imparted to the light beam 29 by the translational drive circuit 34.

The light source 30 comprises a writing laser for producing a collimated writing beam of polarised monochromatic light.

A movable optical assembly 40 and a beam steering optical assembly 41 collectively define an optical path for the light beam 29 issuing from the light source 30. The optical assemblies image the read beam 29 into a spot 42 upon the coating 26 carried by the storage member 10. The optical path is also represented by the line identified by the numerals 29 and 29'.

A light intensity modulating assembly 44 is positioned in the optical path 29 between the light source 30 and the coating 26.

The light beam 29 is modulated as it passes through the light intensity modulating assembly 44. Thereafter the modulated light beam, now represented by the numeral 29' is imaged upon the coating 26 by the optical assemblies 40 and 41. As the modulated light beam 29' impinges upon the coating 26, indicia are formed in said coating 26 representative of the frequency modulated signal to be stored.

The light intensity modulating assembly 44 includes an electrically controllable subassembly 46 which is responsive to the frequency modulator 20 for varying the intensity of the light beam 29' above a predetermined intensity at which the focused beam 29' alters the coating 26 carried by the information storage member 10.

When the coating 26 carried by the information storage member 10 is a metal coating, the electrically controllable subassembly 46 varies the intensity of the writing beam 29' above a first predetermined intensity at which the focussed beam 29' melts the metal coating without vaporising it and further varies the intensity of the writing beam below the predetermined intensity at which the focused beam 29' fails to melt the metal surface.

The light intensity modulating assembly 44 includes a stabilising circuit 48 for providing a feedback signal which is connected to the electrically controllable subassembly 46 over the lines 50a and 50b to stabilise its operating level.

The light sensing means produces an electrical feedback signal which is representative of the average intensity of the modulated light beam 29'. In this manner, the light intensity modulating assembly 44 is stabilised to issue the light beam at a substantially constant average power level. The stabilising circuit 48 also includes level adjustment means for selectively adjusting the average power level of the light beam 29' to a predetermined value to achieve the preferred duty cycle in either a metal coating 26 or a photoresist coating 26, or any other material used as the coating 26.

The movable optical assembly 40 includes an objective leans 52 and a hydrodynamic air bearing 54 for supporting the lens 52 above the coating 26. A planar convex diverging lens 66 positioned in the light beam 29' is employed for spreading the substantially parallel light beam 29' to at least fill the entrance aperture 56 of the objective lens 52.

The beam steering optical assembly 41 further includes a number of mirror members 58, 60, 62, and 64 for folding the light beams 29' and 29'' as desired.

The subassembly 46 includes a Pockels cell 68, a linear polariser 70 and a Pockels cell driver 72. The Pockels cell driver 72 is essentially a linear amplifier and is responsive to the frequency modulated signal on the line 14. The output from the Pockels cell driver 72 provides driving signals to the Pockels cell 68 for rotating the plane of polarisation of the laser beam 29. The linear polariser 70 is orientated in a predetermined relationship with respect to the original plane of polarisation of the laser beam 29 issuing from the laser source 30.

The stabilising feedback circuit 48 is DC coupled to the Pockels cell 68.

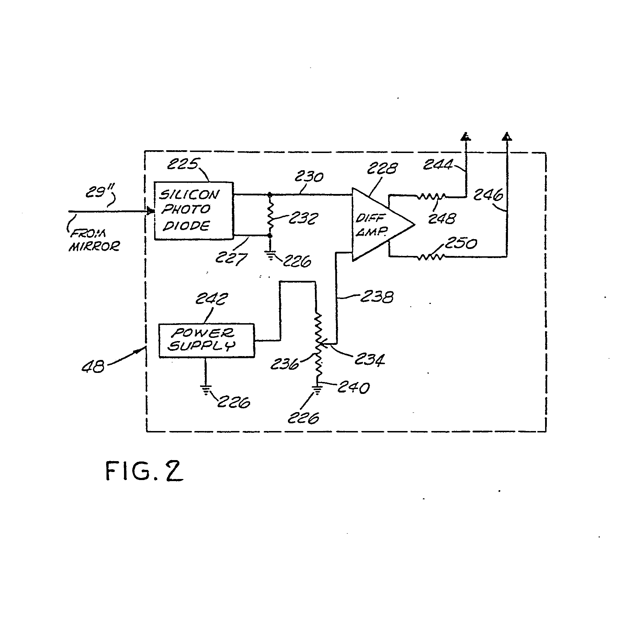

Referring to Figure 2, there is shown an idealised diagram of a Pockels cell stabilising circuit 48 suitable for use in the apparatus of Figure 1.

Depending upon the individual Pockels cell 68, a voltage change of the order of 100 volts causes the cell to rotate the plane of polarisation of the light passing therethrough a full ninety degrees. The Pockels cell drive functions to amplify the output from the information signal source 12 to a peak-to-peak output swing of 100 volts. This provides a proper input driving signal to the Pockels cell 68.

The Pockels cell should be operated at an average rotation of forty-five degrees in order to make the modulated light beam intensity most faithfully reproduce the electrical drive signal. A bias voltage must be provided to the Pockels cell for keeping the Pockels cell at this average operating point. In practice, the electrical bias voltage corresponding to a forty-five degree rotation operating point varies continuously. This continuously changing bias voltage is generated through the use of a servo feedback loop. This feedback loop includes the comparison of the average value of the transmitted light to an adjustable reference value and applying the difference signal to the Pockels cell by means of a DC amplifier. This arrangement stabilizes the operating point. The reference value can be adjusted to correspond to the average transmission corresponding to the forty-five degree operating point and the servo feedback loop provides corrective bias voltages to maintian the Pockels cell at this average rotation of forty-five degrees.

The stabilizing circuit 48 includes a light sensing means 225. A silicon diode operates as a suitable light sensing means. The diode 225 senses a portion 29'' of the writing beam 29' issuing from the optical modulator 44 and passing through the partially reflective mirror 58 as shown in Figure 1. The silicon diode 225 functions in much the same fashion as a solar cell and is a source of electrical energy when illuminated by incident radiation. One output lead of the silicon diode 225 is connected to common reference potential 226 by a line 227. The other output lead of the diode 225 is connected to one input of a differential amplifier 228 by a line 230. The output leads of the silicon cell 225 are shunted by a load resistor 232 which enables a linear response mode.

The other input to the differential amplifier 228 is connected to an adjustable arm 234 of a potentiometer 236 by a line 238. One end of the potentiometer 236 is connected to reference potential 226 by a line 240. A source of power 242 is coupled to the other end of the potentiometer 236 which enables the adjustment of the differential amplifier 228 to generate a feedback signal on the lines 244 and 246 for adjusting the average power level of the modulated laser beam 29′ to a predetermined value.

The output terminals of the differential amplifier 228 are, respectively, connected through resistive elements 248 and 250 and output lines 244 and 246 to the input terminals of the Pockels cell 68 in Figure 1. The Pockels cell driver 72 is AC coupled to the Pockels cell 68 by way of capacitive elements 252 and 254, respectively, while the differential amplifier 228 is DC coupled to the Pockels cell 68.

In operation, the system is energized. The portion 29″ of the light from the writing beam 29′ impinging on the silicon diode 225 generates a differential voltage at one input to the differential amplifier 228. Initially, the potentiometer 236 is adjusted so that the average transmission through the Pockels cell corresponds to forty-five degree of rotation. Thereafter, if the average level of intensity impinging on the silicon cell 225 either increases or decreases, a correcting voltage will be generated by the differential amplifier 228. The correcting voltage applied to the Pockels cell 68 is of a polarity and magnitude adequate to restore the average level of intensity to the predetermined level selected by adjustment of the input voltage to the other input of the differential amplifier over the line 238, by movement of the movable arms 234 along the potentiometer 236.

The adjustable arms 234 of potentiometer 236 is the means for selecting the average level of intensity of the light generated by the write laser 30. Optimum results are achieved when the length of an aperture 37 exactly equals the length of the next succeeding space 38 as previously described. The adjustment of potentiometer 236 is the means for achieving this equality of length. When the length of an aperture equals the length of its next adjacent space, a duty cycle of fifty-fifty is achieved. Such duty cycle is detectable by examining the display of the just written information on the TV monitor and/or oscilloscope 166 and 168, respectively, as previously described. Commercially acceptable results occur when the length of an aperture 37 varies between forty and sixty percent of the combined length of an aperture and its next successively positioned space. In other words, the length of an aperture and the next successively positioned space is measured. The aperture can then be a length falling within the range of forty and sixty percent of the total length.

In a first embodiment using a metal coating 26, the output from the laser 30 is adjusted so as to produce an intensity which begins to melt the metal layer coating 26 positioned on the disc 10, when the output from the driver 72 is zero and the operating point of the Pockels cell is forty-five degrees. Accordingly, as the output from the driver 72 goes positive, melting continues. Also, when the output from the driver 72 goes negative, melting stops.

In a second embodiment using a photoresist coating 26, the output from the laser 30 is adjusted so as to produce an intensity which both illuminates and exposes the photoresist coating 26 when the output from the driver 72 is generating its mid-voltage value.

The level of beam intensity at which melting or exposure first occurs is called the threshold level.

In both the first and second embodiments just described, the absolute power level is adjusted upward and downward in relation to the threshold level to achieve this effect by adjusting the power supply of the write laser 30. In combination with this adjustment of the absolute power level of the write laser 30, the potentiometer 236 is also used to cause indicia to be formed in the coating 26 when the beam 29 is rotated above forty-five degrees as previously described.

**Claims**

1. A method of writing an information track on a disc (10) having a surface capable of responding to more than a certain intensity of laser or other radiation (29″) (the threshold level) by being converted from having one radiation reflecting characteristic (37) to having a second characteristic (38), in which the intensity of the radiation directed at a local point along the track is modulated over a defined range of modulation in response to an information signal, the average intensity of the modulated radiation being compared with a reference signal (238), and a result comparison signal (244, 246) being fed back to adjust continuously a bias level of modulation, which method is characterised in that said reference signal and the intensity of the unmodulated radiation are such that the modulation is at the centre of its range of modulation when the intensity of the modulated beam equals the threshold level.

2. A method as claimed in Claim 1 in which the modulator varies the plane of polarisation of radiation through a range of 90° and there are 45° of rotation of the plane of polarisation when the intensity of the modulated beam equals the threshold level.

3. A method as claimed in Claim 1 or Claim 2, in which the modulator is a Pockels Cell (68) and a linear polariser (70).

4. A method as claimed in any of Claims 1—3 in which the average intensity is sensed by a photoresponsive semiconductor device (225).

5. A method as claimed in any of Claims 1—4 in which the information signal is a frequency modulated video signal.

## Patentansprüche

1. Verfahren zum Schreiben einer Informationsspur auf einer Scheibe (10), deren Oberfläche die Fähigkeit hat, auf mehr als eine bestimmte Intensität von Laser- oder sonstiger Strahlung (29'') (den Schwellwertpegel) anzusprechen, indem sie umgewandelt wird und statt eines bestimmten Reflexionsmerkmals (37) ein zweites Merkmal (38) aufweist, bei welchem die Intensität der auf eine Ortspunkt auf der Spur gerichteten Strahlung über einer definierten Modulationsbereich hinweg nach Maßgabe eines Informationssignals moduliert wird, wobei die mittlere Intensität der modulierten Strahlung mit einem Bezugssignal (238) verglichen wird und ein sich ergebendes Vergleichssignal (244, 246) zurückgeführt wird, um kontinuierlich einen Vorspannungs-Modulationsspiegel einzustellen, dadurch gekennzeichnet, daß das Bezugssignal und die Intensität der unmodulierten Strahlung derart sind, daß die Modulation in der Mitte ihres Modulationsbereiches liegt, wenn die Intensität des modulierten Strahls gleich dem Schwellwertpegel ist.

2. Verfahren nach Anspruch 1, dadurch gekennzeichnet, daß der Modulator die Polarisationsebene der Strahlung in einen Bereich von 90° ändert, und daß die Drehung der Polarisationsebene 45° beträgt, wenn die Intensität des modulierten Strahls gleich dem Schwellwertpegel ist.

3. Verfahren nach Anspruch 1 oder 2, dadurch gekennzeichnet, daß als Modulator eine Pockels-Zelle (68) mit einem Linearpolarisator (70) vorgesehen ist.

4. Verfahren nach einem der Ansprüche 1 bis 3, dadurch gekennzeichnet, daß die mittlere Intensität durch ein lichttempfindliches Halbleitergerät (225) abgetastet wird.

5. Verfahren nach einem der Ansprüche 1 bis 4, dadurch gekennzeichnet, daß das Informationssignal ein frequenzmoduliertes Videosignal ist.

## Revendications

1. Méthode pour écrire une piste d'information sur un disque (10) ayant une surface pouvant répondre à plus d'une certaine intensité de laser ou autre rayonnement (29'') (le niveau de seuil) en étant convertie d'une caractéristique (37) de réflexion d'un rayonnement à une seconde caractéristique (38), où l'intensité du rayonnement dirigé en un point local le long de la piste est modulée sur une gamme définie de modulation en réponse à un signal d'information, l'intensité moyenne du rayonnement modulé étant comparée à un signal de référence (238), et un signal de résultat de comparaison (244, 246) étant réappliqué pour ajuster continuellement un niveau de polarisation de modulation, laquelle méthode est charactérisée en ce que ledit signal de référence et l'intensité du rayonnement non modulé sont tels que la modulation soit au centre de sa gamme de modulation lorsque l'intensité du faisceau modulé est égale au niveau de seuil.

2. Méthode selon la revendication 1 où le modulateur fait varier le plan de polarisation du rayonnement sur une gamme de 90° et il y a 45° de rotation du plan de polarisation lorsque l'intensité du faisceau modulé est égale au niveau de seuil.

3. Méthode selon la revendication 1 ou la revendication 2 où le modulateur est une cellule de Pockels (68) et un polariseur linéaire (70).

4. Méthode selon l'une quelconque des revendications 1 à 3 où l'intensité moyenne est détectée par un dispositif semi-conducteur photosensible (225).

5. Méthode selon l'une quelconque des revendications 1 à 4 où le signal d'information est un signal vidéo modulé en fréquence.

FIG. I

FIG. 2